# FASCICULE DE BREVET EUROPEEN

(11) **EP 0 409 677 B1**
(45) Date de publication et mention de la délivrance du brevet: **30.03.1994**
(21) Numéro de dépôt: 90401762.1
(22) Date de dépôt: 21.06.1990
(51) Int. Cl.: F16F 13/00, B60K 5/12

(54) **Dispositif d'amortissement hydraulique perfectionné, notamment pour la suspension d'un groupe motopropulseur d'un véhicule automobile**
Verbesserte hydraulische Dämpfungsvorrichtung, insbesondere für die Aufhängung einer Antriebseinheit eines Kraftfahrzeuges
Improved hydraulic damping device especially for the suspension of a propulsion unit of a motor vehicle

(30) Priorité: 18.07.1989 FR 8909646
(43) Date de publication de la demande: 23.01.1991
(73) Titulaire: AUTOMOBILES PEUGEOT, 75116 Paris (FR); AUTOMOBILES CITROEN, 92200 Neuilly-sur-Seine (FR)
(72) Inventeur: Le Fol, Marcel, F-35410 Domloup (FR)
(74) Mandataire: Moncheny, Michel

(56) Documents cités:
- DE-A- 3 633 827
- FR-A- 2 356 847
- US-A- 4 651 980
- US-A- 4 842 258
- PATENT ABSTRACTS OF JAPAN vol. 13, no. 36 (M-790)(3384) 26 janvier 1989,& JP-A-63 246526 (KURASHIKI KAKO) 13 octobre 1988,
- PATENT ABSTRACTS OF JAPAN vol. 7, no. 120 (M-217)(1265) 25 mai 1983,& JP-A-58 37337 (TOYODA GOSEI) 04 mars 1983,
- PATENT ABSTRACTS OF JAPAN vol. 8, no. 216 (M-329)(1653) 03 octobre 1984,& JP-A-59 99132 (TOYODA GOSEI) 07 juin 1984,
- PATENT ABSTRACTS OF JAPAN vol. 10, no. 33 (M-452)(2090) 08 février 1986,& JP-A-60 188637 (NISSAN) 26 septembre 1985,
- PATENT ABSTRACTS OF JAPAN vol. 5, no. 22 (M-54)(694) 10 février 1981,& JP-A-55 149436 (TOYOTA) 20 novembre 1980,

## Description

La présente invention concerne un dispositif d'amortissement hydraulique perfectionné, notamment pour la suspension d'un groupe motopropulseur d'un véhicule automobile.

Le document FR-A-2.356.847 propose un dispositif qui somporte une armature externe cylindrique et une armature interne tubulaire maintenue coaxiale dans l'armature externe par un bloc de liaison élastique annulaire fixé par ses surfaces cylindriques intérieure et extérieure respectivement à l'armature interne et à l'armature externe et qui sépare l'espace interne délimité par l'armature externe en une première partie délimitant une première chambre de travail fermée à son extrémité axiale opposée au bloc de liaison.

L'invention vise plus particulièrement à la réalisation d'un dispositif d'amortissement utilisé pour la suspension du groupe motopropulseur et qui a pour rôle principal de filtrer les vibrations dûes aux imperfections d'équilibrage du moteur et notamment les filtrations à basse fréquence, du type mentionné précédemment et qui possède des caractéristiques d'amortissement améliorées, notamment à basse fréquence.

Dans ce but, l'invention propose un dispositif caractérisé en ce que la première chambre de travail est fermée par une coupelle de fermeture sensiblement sphérique dont la concavité est tournée vers l'intérieur de cette première chambre et dans laquelle débouche une extrémité ouverte de l'armature interne tubulaire, et en ce que ledit espace interne comporte une seconde partie ouverte à son extrémité axiale opposée au bloc de liaison pour laisser le passage à l'armature interne tubulaire dont l'extrémité libre qui fait saillie axialement au-delà de l'armature externe est fermée, une seconde chambre étant agencée dans l'armature externe au-delà de la coupelle et délimitée par une membrane étanche reliée à l'armature externe, au moins un orifice étant formé dans la coupelle pour relier la première et la seconde chambre, une première butée axiale élastique de surface de portée sensiblement sphérique convexe étant fixée à l'armature interne tubulaire et agencée dans ladite première chambre pour venir coopérer avec la surface concave en vis-à-vis de la coupelle, une seconde butée axiale élastique de surface de portée sensiblement sphérique convexe étant fixée à l'armature tubulaire interne et agencée dans ladite seconde partie pour venir coopérer avec une surface de butée sensiblement sphérique concave formée en vis-à-vis au voisinage de l'extrémité ouverte de l'armature cylindrique externe.

Grâce à cette structure le dispositif d'amortissement possède des très bonnes caractéristiques d'amortissement notamment des basses fréquences grâce à la colonne de liquide contenue dans l'armature tubulaire interne.

Afin d'augmenter encore la longueur de la colonne de liquide, ledit orifice peut être prévu au centre de la coupelle et être prolongé par un tube interne dont l'extrémité opposée est ouverte et qui s'étend coaxialement dans l'armature interne tubulaire.

Selon d'autres caractéristiques de l'invention :
- l'armature externe comporte un bord radial extérieur sur lequel vient en appui le bord périphérique extérieur circulaire de la coupelle, ces deux bords étant maintenus serrés axialement l'un contre l'autre au moyen d'une douille sertie ;
- la membrane comporte une virole extérieure de renfort qui est fixée contre la paroi intérieure d'une partie de la douille sertie ;
- la virole comporte un bord radial extérieur qui est en appui contre le bord extérieur circulaire de la coupelle contre lequel il est maintenu serré axialement au moyen de la douille sertie ;
- la virole est fixée à la paroi intérieure de la douille par emmanchement ;
- les deux butées axiales et le bloc de liaison élastique annulaire sont surmoulés sur un manchon intermédiaire fixé sur la surface extérieure de l'armature interne tubulaire ;
- les deux butées axiales et le bloc de liaison élastique sont surmoulés sur l'armature tubulaire interne ;
- l'armature cylindrique externe comporte des moyens de liaison du dispositif d'amortissement ainsi que l'extrémité libre fermée de l'armature interne tubulaire.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en coupe axiale d'un premier mode de réalisation d'un dispositif d'amortissement selon l'invention ;
- la figure 2 est une vue similaire à celle de la figure 1 représentant une variante de réalisation du dispositif d'amortissement selon l'invention ;

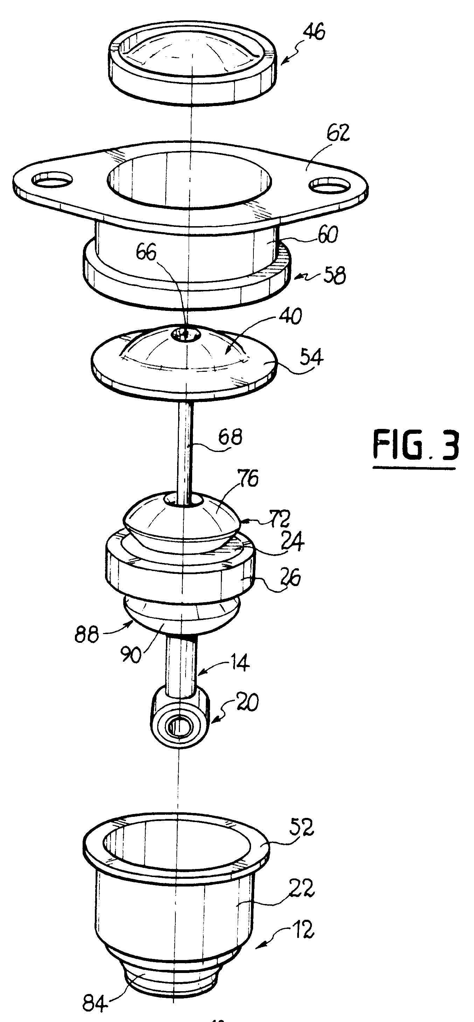

- la figure 3 est une vue en perspective éclatée des principaux composants du dispositif représenté à la figure 2 ;
- la figure 4 est une vue schématique simplifiée en coupe axiale d'un dispositif d'amortissement selon l'invention illustrant les possibilités de débattement angulaire autour du centre élastique du dispositif ; et
- la figure 5 est une vue en coupe axiale d'un moule dans lequel est réalisée l'opération de surmoulage des blocs de butée axiale et du bloc de liaison autour de l'armature interne tubulaire.

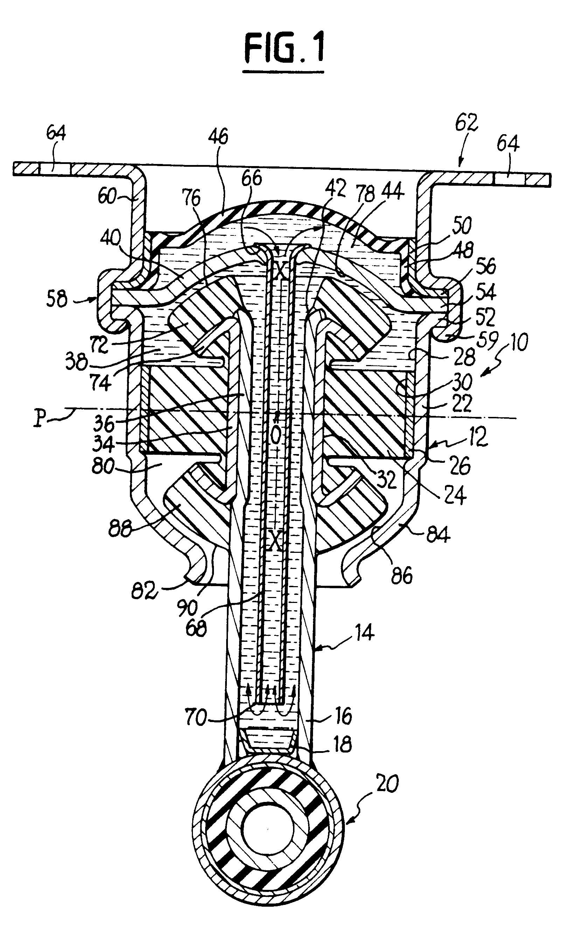

On a représenté à la figure 1 un dispositif d'amortissement hydraulique 10 également appelé support hydroélastique ou butée anti-couple.

La butée 10 est constituée pour l'essentiel par une armature cylindrique externe 12 et par une armature tubulaire interne 14.

L'armature interne 14 est un tube métallique cylindrique creux dont l'extrémité inférieure 16 est fermée par un bouchon 18 et est reliée à un palier élastique de liaison 20.

L'armature externe est une pièce métallique en tôle emboutie dont la portion médiane 22 de section circulaire de plus grand diamètre recoit un bloc de liaison élastique annulaire 24.

Le bloc de liaison 24 en matériau élastomère comporte une bague extérieure 26 métallique ou réalisée en matière thermoplastique qui est montée serrée dans la surface cylindrique intérieure 28 de la portion 22 de l'armature externe 12.

La bague 26 est surmoulée et adhérisée sur la surface cylindrique extérieure 30 du bloc 24.

La surface cylindrique intérieure 32 du bloc 24 est reliée à l'armature tubulaire interne 14 avec interposition d'un manchon intermédiaire 34 qui est serti sur la portion médiane 36 de l'armature tubulaire 14. Le bloc 24 en matériau élastomère est fixé par surmoulage et adhérisation sur la surface cylindrique extérieure du manchon intermédiaire 34.

Le bloc 24 partage l'espace interne délimité par l'armature externe 12 en deux parties, dont une première partie, supérieure en considérant la figure, dans laquelle est délimitée une première chambre hydraulique de travail 38 qui est fermée à son extrémité axiale supérieure opposée au bloc 24 par une coupelle métallique de fermeture 40 de profil sensiblement sphérique dont la concavité est tournée vers le bloc 24.

L'extrémité ouverte 42 de l'armature interne tubulaire 14 débouche dans la première chambre de travail 38.

Une seconde chambre de travail 44 est agencée au-dessus de la première chambre de travail 38 au-delà de la coupelle 40 à l'opposé du bloc de liaison 24.

La seconde chambre de travail 44 est délimitée par la surface sensiblement sphérique convexe de la coupelle 40 et par une membrane en matériau élastomère 46 de profil sensiblement sphérique parallèle à la coupelle 40.

La membrane de fermeture 46 se prolonge axialement vers le bas par une partie cylindrique 48 qui est renforcée par une virole extérieure de renfort 50 qui lui est fixée par adhérisation du surmoulage.

La liaison entre l'armature cylindrique externe 12, la coupelle 40 et la membrane 46 est réalisée de la manière suivante.

L'armature externe 12 comporte un bord radial extérieur 52 contre lequel prend appui un bord périphérique extérieur circulaire 54 de la coupelle 40 ainsi qu'un bord radial extérieur 56 de la virole de renfort 50 de la membrane 46.

Les trois bords 52, 54 et 56 sont maintenus serrés l'un contre l'autre par une douille de sertissage 58 dont on rabat l'extrémité 59 lors du sertissage.

La douille de sertissage 58 se prolonge axialement vers le haut par une partie cylindrique 60 qui se termine par une plaque 62 perpendiculaire à l'axe de la butée qui en permet la fixation par exemple par des vis (non représentées) introduites dans des trous 64.

Les deux chambres de travail 38 et 44 communiquent entre elles par un orifice central 66 formé au milieu de la coupelle 40.

L'orifice 66 se prolonge par un tube interne cylindrique 68 qui s'étend dans l'armature interne tubulaire 14 coaxialement à cette dernière.

L'extrémité inférieure 70 du tube 68 est ouverte pour permettre le passage du liquide à l'intérieur de l'armature tubulaire interne 14 en direction de la première chambre de travail 38 dans laquelle débouche l'extrémité supérieure ouverte 42 de l'armature 14.

Dans la première partie supérieure de l'armature cylindrique externe 12, l'armature tubulaire interne 14 porte un premier bloc de butée axiale 72 en matériau élastomère.

Le bloc de butée axiale 72 est surmoulé sur une partie d'extrémité en forme de dôme 74 du manchon intermédiaire 34. La face supérieure 76 du premier bloc de butée 72 présente un profil de portée sensiblement sphérique convexe agencé parallèlement et en vis-à-vis de la surface interne concave 78 de la coupelle 40.

Les surfaces sphériques sont sensiblement centrées autour du centre élastique O de la butée qui correspond à l'intersection de l'axe longitudinal X-X de la butée avec le plan médian P du bloc élastique de liaison 24.

Le bloc de liaison 24 délimite dans l'armature cylindrique externe 12 une seconde partie de l'espace interne formé à l'opposé des chambres de travail 38 et 44.

Cette seconde partie est un espace ouvert 80 qui s'étend verticalement vers le bas en considérant la figure, jusqu'à l'extrémité axiale ouverte de diamètre réduit 82 de l'armature externe 12.

L'extrémité ouverte 82 permet le passage de l'extrémité inférieure libre 16 du tube 14 qui fait saillie axialement hors de l'armature 12. L'extrémité ouverte 82 est reliée à la portion médiane 22 de l'armature 12 par une portion inférieure de profil sensiblement sphérique 84.

La surface sphérique interne concave 86 de la portion 84 constitue une surface de portée pour un second bloc élastique de butée axiale 88.

Le second bloc de butée 88 est réalisé de manière symétrique à celui du bloc 72 de manière à présenter une surface de portée sensiblement sphérique convexe 90 susceptible de venir coopérer avec la surface concave 86.

La butée qui vient d'être décrite fonctionne suivant le principe des supports hydroélastiques dits à colonnes. C'est-à-dire que la chambre de travail 38 et la chambre de travail 44 formant chambre d'expansion sont reliées entre elles de manière à ce que le liquide qu'elles contiennent passe alternativement d'une chambre à l'autre grâce au tube métallique constituant l'armature tubulaire interne 14 et au tube interne 68 réalisé en matériau souple (élastomère ou thermoplastique).

La solution proposée à deux tubes concentriques et coaxiaux permet de doubler la longueur de la colonne de liquide et ainsi d'obtenir de très bonnes performances d'amortissement dans une très grande plage de fréquence de vibrations et ceci notamment si on les compare à celles obtenues dans des cales de type connu dans lesquelles les colonnes sont radiales.

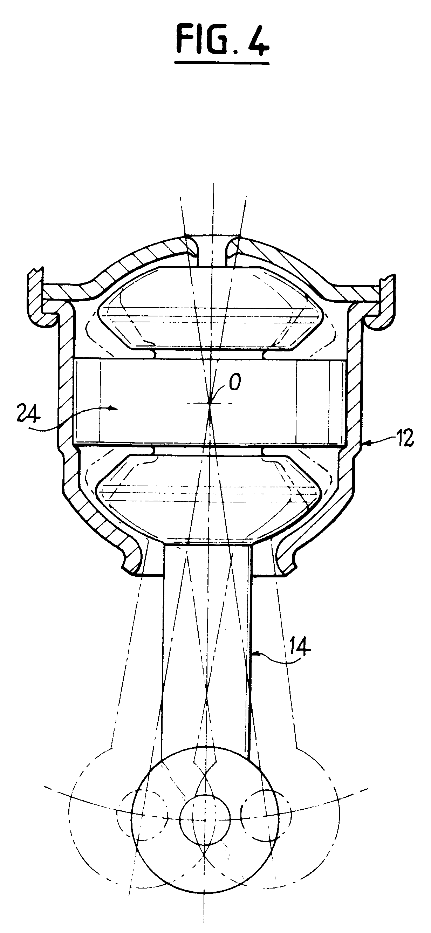

On a représenté à la figure 4 les possibilités de débattement en rotation de l'équipage interne de la butée autour du centre élastique O et ceci sous forme de deux représentations en traits mixtes de part et d'autre de la position médiane axiale de repos. Afin de faciliter ces mouvements de basculement le tube interne 68 peut être réalisé en matériau souple, par exemple en matériau élastomère, renforcé ou non, ou en matériau thermoplastique.

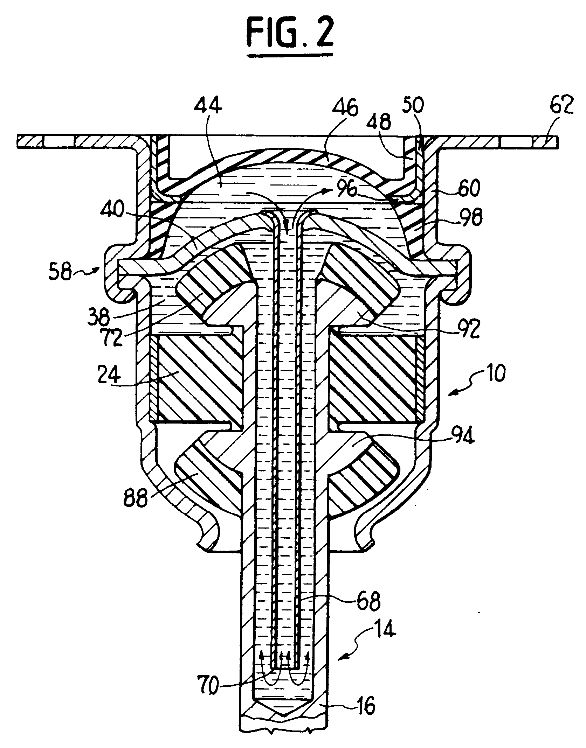

On décrira maintenant la variante de réalisation représentée à la figure 2.

Les mêmes chiffres de référence sont utilisés pour désigner des organes ou composants identiques ou similaires à ceux de la figure 1.

La butée 10 représentée à la figure 2 diffère de celle de la figure 1 notamment par le fait qu'il n'est pas prévu de manchon intermédiaire 34 et qu'en conséquence les blocs de butée axiale 72 et 88 ainsi que le bloc de liaison élastique 24 sont surmoulés directement sur l'armature tubulaire interne 14.

Afin de renforcer les blocs de butée axiale 72 et 88 l'armature interne 14 comporte deux épaulements radiaux de profil externe sphérique 92 et 94.

Ce second mode de réalisation diffère également par le mode de fixation de la membrane d'étanchéité 46.

La membrane 46 se prolonge par une partie cylindrique 48 qui est ici tournée verticalement vers le haut, c'est-à-dire à l'opposé de la coupelle 40 et qui est également renforcée par une virole 50. A sa partie inférieure, la virole 50 comporte un bord radial intérieur de renfort 96 qui est noyé dans le matériau élastomère constituant la membrane 46, ce matériau se prolongeant axialement vers le bas sous la forme d'un manchon 98 qui vient assurer l'étanchéité avec la face supérieure de la coupelle 40 et la surface cylindrique intérieure de la partie 60 de la douille de sertissage 58.

La membrane 46 est emmanchée dans la portion 60 grâce à la virole 50.

On constate enfin que l'extrémité inférieure 16 du tube constituant l'armature interne 14 est un alésage borgne et qui ne nécessite donc pas de bouchon de fermeture.

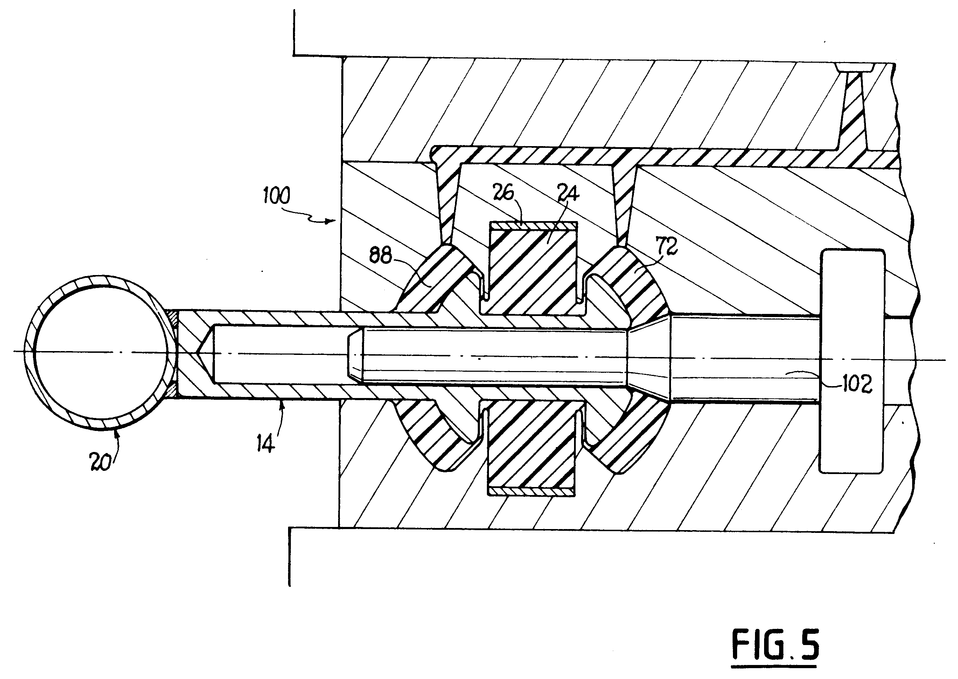

On a représenté à la figure 5 un moule 100 permettant de surmouler en une seule opération les blocs de butée axiale 72 et 88 ainsi que le bloc de liaison élastique 24 équipé de sa bague extérieure 26 en une seule opération.

L'opération de moulage se fait selon le processus suivant. Le moule étant ouvert et la broche porte-armature 102 étant dégagée, on met en place successivement la bague de renfort 26 dans la partie inférieure du moule puis l'armature interne tubulaire 14 sur la broche de moulage 102. On introduit ce dernier ensemble dans la partie inférieure du moule puis on procède à la fermeture du moule et enfin à l'injection du matériau élastomère.

Le dispositif d'amortissement qui vient d'être décrit est notamment avantageux pour la reprise du couple engendré par le groupe motopropulseur d'un véhicule automobile lors de son fonctionnement.

A cet effet le dispositif est monté en appui au moyen de la plaque 62 contre une partie de la structure de la caisse du véhicule automobile, cette dernière reprenant les efforts exercés grâce au palier d'articulation 20 situé à l'autre extrémité du dispositif et relié au groupe motopropulseur.

## Revendications

1. Dispositif d'amortissement hydraulique perfectionné (10), notamment pour la suspension d'un groupe motopropulseur de véhicule automobile, qui comporte une armature externe cylindrique (12) et une armature interne tubulaire (14) maintenue coaxiale dans l'armature externe (12) par un bloc de liaison élastique annulaire (24) fixé par ses surfaces cylindriques intérieure (32) et extérieure (30) respectivement à l'armature interne (14) et à l'armature externe (12) et qui sépare l'espace interne délimité par l'armature externe en une première partie délimitant une première chambre hydraulique de travail (38) fermée à son extrémité axiale opposée au bloc de liaison (24), caractérisé en ce que la première chambre de travail est fermée par une coupelle de fermeture (40) sensiblement sphérique dont la concavité est tournée vers l'intérieur de cette première chambre (38) et dans laquelle débouche une extrémité ouverte (42) de l'armature interne tubulaire (14), et en ce que ledit espace interne comporte une seconde partie ouverte à son extrémité axiale (82) opposée au bloc de liaison (24) pour laisser le passage à l'armature interne tubulaire (14) dont l'extrémité libre (16, 18) qui fait saillie axialement au-delà de l'armature externe (12) est fermee. une seconde chambre (44) étant agencée dans l'armature externe (12) au-delà de la coupelle (40) et délimitée par une membrane étanche (46) reliée à l'armature externe, au moins un orifice (66) étant formé dans la coupelle (40) pour relier la première (38) et la seconde chambre (44), une première butée axiale élastique (72) de surface de portée sensiblement sphénique convexe (76) étant fixée à l'armature interne tubulaire (14) et agencée dans ladite première chambre (38) pour venir coopérer avec la surface concave en vis-à-vis (78) de la coupelle (40), une seconde butée axiale élastique de surface de portée sensiblement sphérique convexe (88) étant fixée à l'armature tubulaire interne (14) et agencée dans ladite seconde partie pour venir coopérer avec une surface de butée sensiblement sphérique concave (86) formée en vis-à-vis au voisinage de l'extrémité ouverte (82) de l'armature cylindrique externe (12).

2. Dispositif d'amortissement selon la revendication 1 caractérisé en ce que ledit orifice (66) est prévu au centre de la coupelle (40) et en ce qu'il se prolonge par un tube interne (68) dont l'extrémité opposée (70) est ouverte et qui s'étend coaxialement dans l'armature interne tubulaire (14).

3. Dispositif d'amortissement selon l'une des revendications 1 ou 2, caractérisé en ce que l'armature externe (12) comporte un bord radial extérieur (52) sur lequel vient en appui le bord périphérique extérieur circulaire (54) de la coupelle (40), ces deux bords étant maintenus serrés axialement l'un contre l'autre au moyen d'une douille (58) et du bord serti (59).

4. Dispositif d'amortissement selon la revendication 3, caractérisé en ce que ladite membrane (46) comporte une virole extérieure de renfort (50) qui est fixée contre la paroi intérieure d'une partie (60) de la douille sertie (58).

5. Dispositif d'amortissement selon la revendication 4, caractérisé en ce que ladite virole (50) comporte un bord radial extérieur (56) qui est en appui contre le bord extérieur circulaire (54) de la coupelle (40) contre lequel il est maintenu serré axialement au moyen de la douille sertie (58).

6. Dispositif d'amortissement selon la revendication 4, caractérisé en ce que ladite virole est fixée à ladite paroi intérieure par emmanchement.

7. Dispositif d'amortissement selon l'une quelconque des revendications précédentes, caractérisé en ce que les deux blocs constituant les butées axiales (72, 88) et le bloc de liaison élastique annulaire (24) sont surmoulés sur un manchon intermédiaire (34) fixé sur la surface extérieure de l'armature interne tubulaire (14).

8. Dispositif d'amortissement selon l'une quelconque des revendications 1 à 6, caractérisé en ce que les deux blocs constituant les butées axiales (72, 88) et le bloc de liaison élastique (24) sont surmoulés sur l'armature tubulaire interne (14).

9. Dispositif d'amortissement selon l'une quelconque des revendications précédentes, caractérisé en ce que l'armature cylindrique externe (12) comporte des moyens de liaison (62) du dispositif d'amortissement, et en ce que l'extrémité libre fermée de l'armature interne tubulaire (14) comporte également des moyens de liaison (20) du dispositif d'amortissement.

## Patentansprüche

1. Verbesserte hydraulische Dämpfungsvorrichtung (10), insbesondere für die Aufhängung der Antriebseinheit eines Kraftfahrzeugs, die eine äußere zylindrische Armatur (12) und eine innere rohrförmige Armatur (14) umfaßt, die in der äußeren Armatur (12) durch einen elastischen ringförmigen Verbindungsblock (24) koaxial gehalten ist, der über seine zylindrische Innenfläche (32) und seine zylindrische Außenfläche (30) an der inneren Armatur (14) bzw. an der äußeren Armatur (12) befestigt ist und den von der äußeren Armatur abgegrenzten Innenraum in einen ersten Teil trennt, der eine erste hydraulische Arbeitskammer (38) abgrenzt, die an ihrem dem Verbindungsblock (24) entgegengesetzten axialen Ende geschlossen ist, dadurch gekennzeichnet, daß die erste Arbeitskammer durch eine im wesentlichen sphärische Verschlußschale (40) verschlossen ist, die auf das Innere der ersten Kammer (38) zu konkav ist und in der ein offenes Ende (42) der inneren rohrförmigen Armatur (14) ausmündet, und daß der Innenraum einen zweiten Teil umfaßt, der an seinem dem Verbindungsblock (24) entgegengesetzten axialen Ende (82) offen ist, um den Durchgang der inneren rohrförmigen Armatur (14) zu gestatten, deren über die äußere Armatur (12) axial hinausragendes freies Ende (16, 18) geschlossen ist, wobei eine zweite Kammer (44) in der äußeren Armatur (12) auf der anderen Seite der Schale (40) angeordnet und durch eine mit der äußeren Armatur verbundene dichte Membran (46) abgegrenzt ist, wenigstens eine Öffnung (66) in der Schale (40) zur Verbindung der ersten (38) und der zweiten Kammer (44) vorgesehen ist, ein erster elastischer axialer Anschlag (72) mit einer im wesentlichen sphärischen konvexen Auflagefläche (76) an der inneren rohrförmigen Armatur (14) befestigt und in der ersten Kammer (38) so angeordnet ist, daß er mit der gegenüberliegenden konkaven Fläche (78) der Schale (40) zusammenwirken kann, und ein zweiter elastischer axialer Anschlag mit einer im wesentlichen sphärischen konvexen Auflagefläche (88) an der inneren rohrförmigen Armatur (14) befestigt und in dem zweiten Teil so angeordnet ist, daß er mit einer im wesentlichen sphärischen konkaven Anschlagsfläche (86) zusammenwirken kann, die ihm gegenüber in Nähe des offenen Endes (82) der äußeren zylindrischen Armatur (12) gebildet ist.

2. Dämpfungsvorrichtung nach Anspruch 1, dadurch gekennzeichnet, daß die Öffnung (66) in der Mitte der Schale (40) vorgesehen ist und daß sie durch ein ein inneres Rohr (68) verlängert ist, dessen entgegengesetztes Ende (70) offen ist und das sich koaxial in der inneren rohrförmigen Armatur (14) erstreckt.

3. Dämpfungsvorrichtung nach einem der Ansprüche 1 oder 2, dadurch gekennzeichnet, daß die äußere Armatur (12) einen radialen äußeren Rand (52) besitzt, an dem der kreisförmige äußere Umfangsrand (54) der Schale (40) zum Anliegen kommt, wobei diese beiden Ränder durch eine Buchse (58) und den gefalzten Rand (59) axial gegeneinandergepreßt gehalten sind.

4. Dämpfungsvorrichtung nach Anspruch 3, dadurch gekennzeichnet, daß die Membran (46) einen äußeren Verstärkungsring (50) besitzt, der an der Innenwand eines Teils (60) der gefalzten Buchse (58) befestigt ist.

5. Dämpfungsvorrichtung nach Anspruch 4, dadurch gekennzeichnet, daß der Ring (50) einen radialen Außenrand (56) besitzt, der auf dem kreisförmigen Außenrand (54) der Schale (40) aufliegt, an den er durch die gefalzte Buchse (58) axial angepreßt gehalten wird.

6. Dämpfungsvorrichtung nach Anspruch 4, dadurch gekennzeichnet, daß der Ring an der Innenwand durch Einpressen befestigt ist.

7. Dämpfungsvorrichtung nach einem der vorhergehenden Ansprüche, dadurch gekennzeichnet, daß die beiden die axialen Anschläge (72, 88) bildenden Blöcke und der ringförmige elastische Verbindungsblock (24) auf eine auf der Außenfläche der inneren rohrförmigen Armatur (14) befestigte Zwischenmuffe (34) aufgeformt sind.

8. Dämpfungsvorrichtung nach einem der Ansprüche 1 bis 6, dadurch gekennzeichnet, daß die beiden die axialen Anschläge (72, 88) bildenden Blöcke und der elastische Verbindungsblock (24) auf die innere rohrförmige Armatur (14) aufgeformt sind.

9. Dämpfungsvorrichtung nach einem der vorhergehenden Ansprüche, dadurch gekennzeichnet, daß die äußere zylindrische Armatur (12) Einrichtungen (62) zur Verbindung der Dämpfungsvorrichtung besitzt und daß das freie geschlossenen Ende der inneren rohrförmigen Armatur (14) ebenfalls Einrichtungen (20) zur Verbindung der Dämpfungsvorrichtung besitzt.

## Claims

1. Improved hydraulic damper device (10), particularly for the suspension of a motor vehicle motorised propulsion unit, which includes a cylindrical external reinforcement (12) and a tubular internal reinforcement (14) held coaxially in the external reinforcement (12) by an annular elastic connection block (24) fixed by its inner (32) and outer (30) cylindrical surfaces to the internal reinforcement (14) and to the external reinforcement (12) respectively, and which separates the internal space defined by the external reinforcement into a first part defining a first hydraulic working chamber (38) closed at its axial end opposite the connection block (24), characterized in that the first working chamber is closed by a substantially spherical closure cup (40) the concavity of which points towards the inside of this first chamber (38), and into which there emerges an open end (42) of the tubular internal reinforcement (14), and in that the said internal space includes a second part which is open at its axial end (82) opposite the connection block (24) to allow passage for the tubular internal reinforcement (14) the free end (16, 18) of which, projecting axially beyond the external reinforcement (12), is closed, a second chamber (44) being arranged in the external reinforcement (12) beyond the cup (40) and defined by an impermeable membrane (46) connected to the external reinforcement, at least one orifice (66) being formed in the cup (40) to connect the first (38) and the second (44) chambers, a first elastic axial stop (72) with a substantially spherical convex bearing surface (76) being fixed to the tubular internal reinforcement (14) and arranged the said first chamber (38) to interact with the opposing concave surface (78) of the cup (40), a second elastic axial stop of substantially spherical convex bearing surface (88) being fixed to the internal tubular reinforcement (14) and arranged in the said second part to interact with a substantially spherical concave stop surface (86) formed opposite it in the vicinity of the open end (82) of the external cylindrical reinforcement (12).

2. Damper device according to Claim 1, characterized in that the said orifice (66) is provided at the centre of the cup (40), and in that it is extended by an internal tube (68) the opposite end (70) of which is open, and which extends coaxially into the tubular internal reinforcement (14).

3. Damper device according to one of Claims 1 and 2, characterized in that the external reinforcement (12) includes an outer radial edge (52) onto which the circular outer peripheral edge (54) of the cup (40) comes to bear, these two edges being held axially tightly against one another by means of a sleeve (58) and of the crimped edge (59).

4. Damper device according to Claim 3, characterized in that the said membrane (46) includes an outer reinforcing band (50) which is fixed against the inner wall of a part (60) of the crimped sleeve (58).

5. Damper device according to Claim 4, characterized in that the said band (50) includes an outer radial edge (56) which bears against the circular outer edge (54) of the cup (40), against which circular outer edge it is held tightly axially by means of the crimped sleeve (58).

6. Damper device according to Claim 4, characterized in that the said band is fixed to the said inner wall by an interference fit.

7. Damper device according to any one of the preceding claims, characterized in that the two blocks constituting the axial stops (72, 88) and the annular elastic connection block (24) are overmoulded on an intermediate sleeve tube (34) fixed to the outer surface of the tubular internal reinforcement (14).

8. Damper device according to any one of Claims 1 to 6, characterized in that the two blocks constituting the axial stops (72, 88) and the elastic connection block (24) are overmoulded on the internal tubular reinforcement (14).

9. Damper device according to any one of the preceding claims, characterized in that the external cylindrical reinforcement (12) includes means (62) for connecting the damper device, and in that the closed free end of the tubular internal reinforcement (14) also includes means (20) for connecting the damper device.
